# EUROPÄISCHE PATENTANMELDUNG

(11) **EP 2 674 505 A2**
(43) Veröffentlichungstag der Anmeldung: **18.12.2013**
(21) Anmeldenummer: 13170631.9
(22) Anmeldetag: 05.06.2013
(51) Int. Cl.: C21D 9/38, C21D 1/25

(54) **Gravurwalzen-Herstellungsverfahren sowie Gravurwalze**

(30) Priorität: 14.06.2012 DE 102012105163
(71) Anmelder: Andritz Küsters GmbH, 47805 Krefeld (DE)
(72) Erfinder: Kubik, Klaus, 47918 Tönisvorst (DE); Hünnekens, Andre, 47647 Kerken (DE)
(74) Vertreter: Kluin, Jörg-Eden

(57) **Zusammenfassung**

Gravurwalzen-Herstellungsverfahren, mit den folgenden Schritten:
- Bereitstellen eines abgekühlten Walzenrohlings
- Kontinuierliches, zonenweises Randschichtaufheizen des Walzenrohlings
- Abschrecken der aufgeheizten Randschichtzone
- Anlassen der Randschicht auf Vergütungsgefüge
- Gravieren des Walzenkörpers.

## Beschreibung

Die Erfindung betrifft ein Gravurwalzen-Herstellungsverfahren sowie eine insbesondere nach diesem Verfahren hergestellte Gravurwalze.

Derartige Gravurwalzen finden insbesondere zur Verfestigung von Lagen, die thermoplastische Fasern oder Filamente umfassen, zu Vliesbahnen Verwendung, indem die Gravurwalze zusammen mit einer glatten oder auch gravierten Gegenwalze einen Walzenspalt bildet, durch den die zu verfestigende Lage aus Fasern oder Filamenten hindurchgeführt wird. Die Verfestigung findet insbesondere durch ein Aufschmelzen und Verbinden der thermoplastischen Fasern bzw. Filamenten im Bereich der Gravurpunkte statt.

Mit dieser Technik werden auch Vliesbahnen hergestellt, die nach der Verfestigung lediglich geringe Dicken von wenigen Millimetern oder sogar kleiner als einem Millimeter aufweisen.

Damit eine gleichmäßige Vliesbahnqualität über deren gesamte Breite und Länge sichergestellt ist, müssen die beiden gegeneinander arbeitenden Walzen zunächst einen möglichst guten Rundlauf aufweisen, damit der Walzenspalt eine möglichst konstante Spaltbreite aufweist.

Darüber hinaus muss die Gravur der Gravurwalze über den Umfang und über die Walzenlänge möglichst gleichmäßig sein, insbesondere gleiche Pressflächenanteile aufweisen, damit die verfestigte Vliesbahn eine gleichmäßige Oberflächenstruktur und Festigkeit erhält.

Zur Erzeugung der hier in erster Linie betroffenen Vliesbahnen werden die Fasern bzw. Filamente regelmäßig zunächst auf einem endlos angetriebenen Transportband maschinell abgelegt. Hierbei kann es durch sogenannte "Spucker" der dem Ablegen der Fasern bzw. Filamente dienenden Vorrichtung zu lokalen Materialanhäufungen kommen. Diese "Dickstellen", aber auch Falten, die sich beim Einziehen des Geleges in den Walzenspalt bilden können, bewirken lokale starke Materialbelastungen der den Walzenspalt begrenzenden Walzen beim Durchtritt durch den Walzenspalt. Diese lokalen Materialbelastungen führen erfahrungsgemäß insbesondere bei der Gravurwalze regelmäßig zu lokalen, plastischen Verformungen, die zu einer Verminderung der Vliesbahnqualität oder gar zu deren Unbrauchbarkeit führen.

Sind solch plastische Verformungen in der Gravurwalze entstanden, so muss diese nachbearbeitet werden. Im günstigen Falle ist hierzu lediglich ein Überschleifen des Außenumfanges, der von den erhabenen Stellen der Gravur gebildet wird, notwendig. Mit jedem Schleifvorgang sinkt die Gravurtiefe und es steigt der Pressflächenanteil. Regelmäßig ist daher auch ein komplettes Abarbeiten (meist Abdrehen) der bestehenden Gravur und eine anschließende, aufwändige Neugravur der Walze erforderlich.

Der Erfindung liegt daher die Aufgabe zugrunde, ein Gravurwalzen-Herstellungsverfahren zu schaffen, mit welchem Gravurwalzen erzeugbar sind, die widerstandsfähiger gegen plastische Verformungen aufgrund von durch den Walzenspalt durchlaufende Dickstellen, hervorgerufen beispielsweise durch "Spucker" oder Falten, sind. Ferner betrifft die Erfindung eine diesbezüglich widerstandsfähigere Gravurwalze.

Diese Aufgabe wird durch das in Anspruch 1 wiedergegebene Gravurwalzen-Herstellungsverfahren sowie die in Anspruch 11 wiedergegebene Gravurwalze gelöst.

Das erfindungsgemäße Gravurwalzen-Herstellungsverfahren umfasst die folgenden Schritte:
- Bereitstellen eines abgekühlten Walzenrohlings
- Kontinuierliches, zonenweises Randschichtaufheizen des Walzenrohlings
- Abschrecken der aufgeheizten Randschicht sowie
- Anlassen auf Vergütungsgefüge
- Gravieren des Walzenkörpers.

Dem erfindungsgemäßen Gravurwalzen-Herstellungsverfahren liegt die überraschende Erkenntnis zugrunde, dass regelmäßig die notwendige Abkühlgeschwindigkeit in den Walzenrändern nicht erzielt wird, die zum Erhalt eines für die mechanischen Eigenschaften einer Gravurwalze im Randbereich wünschenswerten Gefüges erforderliche wäre, wenn - wie üblich - der vollständig, d.h. über zumindest nahezu seinem gesamten Volumen aufgeheizte Walzenkörper abgeschreckt wird.

Das erfindungsgemäße Gravurwalzen-Herstellungsverfahren sieht daher den Verfahrensschritt des kontinuierlichen, zonenweisen Randschichtaufheizens des Walzenrohlings nach dessen Abkühlung zumindest nahezu auf Raumtemperatur auch in seinem Inneren vor. Beim kontinuierlichen, zonenweisen Randschichtaufheizen wird der Umfang des Walzenkörpers über einen Teil seiner Länge - der Zone - unter Verwendung eines Aufheizmittels auf die gewünschte Temperatur aufgeheizt. Durch Verlagerung des Aufheizmittels in Längsrichtung des Walzenkörpers wird die Zone kontinuierlich über die Gesamtlänge des Walzenkörpers verlagert. Unmittelbar in Verlagerungsrichtung hinter dem Aufheizmittel findet das anschließende Abschrecken der aufgeheizten Randschicht statt. Es wird in dieser eine erheblich höhere Abkühlgeschwindigkeit als bei einem über zumindest nahezu seinem gesamten Volumen aufgeheizten Walzenkörper erzielt, da kein Wärmetransport vom Innern des Walzenkörpers zur Oberfläche stattfindet und die Abkühlgeschwindigkeit reduziert.

Nach dem Abschrecken wird die Randschicht auf Vergütungsgefüge angelassen. Unter "Vergütungsgefüge" sei ein Gefüge zu verstehen, welches eine Härte <= etwa 45 bis 50 HRC aufweist, wie es regelmäßig beim Anlassen mit einer gegenüber einer Härtungsanlasstemperatur (etwa 100° C bis 400° C) hohen Temperatur (etwa 400° C bis 700° C) bei dem Stahlwerkstoff 42CrMo4 entsteht. Dieses Vergütungsgefüge weist insbesondere gegenüber einem Gefüge, welches aufgrund der geringeren Abkühlraten ohne den Zwischenschritt des Randschichtaufheizens des Walzenrohlings entstehen würde, ein für die Verwendung als Gravurwalze besseres Verhältnis zwischen Festigkeit und Zähigkeit auf.

Gegenüber dem Abschrecken im Bad erfolgt das Abschrecken beim Randschichthärten wesentlich rotationssymmetrischer und über die Länge gleichmäßiger. Dadurch sind die Gefügeanteile, wie Ferrit, Martensit und Perlit gleichmäßiger verteilt, und es ergibt sich eine ebenfalls gleichmäßigere Festigkeit und Zähigkeit. Die Walze reagiert auf eine konstante Anpresskraft der Molette mit weniger unterschiedlicher Verformung, der Materialabtrag durch die Ätzvorgänge ist ebenfalls gleichmäßiger. Auch gibt es auf der Walzenoberfläche keine Bereiche, die sich im Betrieb bevorzugt plastisch vorformen.

Durch die Wahl der Randschichtaufheiz-, Abschreck- und Anlassparameter, wie beispielsweise Temperatur, Dauer, Abkühlraten lassen sich Härtewerte gezielt erzeugen. Bei vergleichbaren Härtewerten an der Oberfläche wiesen die Randschichten nach dem Vergüten eine gegenüber Gravurwalzen, die nach dem Stand der Technik hergestellt sind, bessere Zähigkeit auf.

Ein weiterer Vorteil des Randschichtvergütens zeigt sich bei einem eventuellen späteren Nitrieren zur Erzielung eines Verschleißschutzes der Gravur, da der durch die gegenüber dem Stand der Technik höhere Abkühlgeschwindigkeit des Walzenmaterials in der Randschicht größere Martensitanteil besser nitrierfähig ist.

Zudem bewirkt das Randschichtaufheizen eine Auflösung von Karbiden, so dass für das Nitrieren mehr Nitrierbildner zur Verfügung stehen. Die erreichbare Härte in der Nitrierschicht ist höher.

Schließlich werden durch das Randschichtvergüten die Eigenspannungen in der Walze abgebaut, und, sofern neue eingebracht werden, sind diese rotationssymmetrisch. Dadurch werden in späteren Herstellungsschritten (ab dem Gravieren) bananenartige Verzüge über die Länge der Walze minimiert. Diese führen ansonsten beim Schleifen der krumm gewordenen gravierten Walze zu unterschiedlichen Pressflächenanteilen und sind nicht zulässig. Die Gefahr derartiger Verzüge ist gerade bei einem späteren Randschichthärten der gravierten Walze groß, aber auch beim Gravieren selbst und bei einem Nitrieren gegeben.

Ein weiterer Vorteil des erfindungsgemäßen Verfahrens besteht in Folgendem:

Nach dem Stand der Technik ist die Walze vollständig vergütet: Erfindungsgemäß kann die Walze vor dem Randschichtvergüten ebenfalls vorvergütet sein. Die Anlasstemperatur und damit die Vergütungsfestigkeit bestimmend sind die Anforderungen an der Walzenoberfläche. Da hier aber noch ein Randschichtvergüten erfolgt, muss das Vorvergüten keine hohe Festigkeit bringen, und es kann eine hohe Anlasstemperatur gewählt werden. Auch könnte das Vorvergüten ganz entfallen. Damit kann auch das Spannungsarmglühen vor dem Randschichtvergüten bei einer gegenüber dem Stand der Technik höheren Temperatur und somit wirksamer erfolgen. Auch hierdurch kann für das Gravieren eine Walze mit weniger Eigenspannungen und damit weniger Verzugsgefahr bereitgestellt werden.

Bei dem erfindungsgemäßen Gravurwalzen-Herstellungsverfahren werden die Verfahrensschritte des Randschichtaufheizens des Walzenrohlings, des Abschreckens der aufgeheizten Randschicht und des Anlassen der Randschicht auf Vergütungsgefüge vorzugsweise so durchgeführt, dass die Dicke der vergüteten Randschicht zwischen 1 und 50 mm beträgt.

Bei einer Variante des erfindungsgemäßen Gravurwalzen-Herstellungsverfahrens wird nach dem Gravieren eine Randschichthärtung durchgeführt. Aufgrund dieser Maßnahme kann die Widerstandsfähigkeit der die Gravur umfassenden Schicht erhöht werden.

Es ist jedoch ebenfalls möglich, eine Randschichthärtung vor dem Gravieren durchzuführen, sofern die Randschicht nach diesem Verfahrensschritt und das gewählte Gravurverfahren noch ein Gravieren zulassen.

Die Randschichthärtung kann beispielsweise die Verfahrensschritte des Randschichtaufheizens, ein nachfolgendes Abschrecken der Randschicht und ein nachfolgendes Anlassen auf Härtegefüge umfassen. Dabei können die Randschichthärtungs-Verfahrensparameter, wie Temperatur, Aufheizdauer, Abkühlrate, Anlasstemperatur etc. so eingestellt werden, dass die Dicke des durch die Randschichthärtung erzeugten Randschichtgefüges kleiner ist als die Dicke der zuvor erzeugten Vergütungsgefüge-Randschicht. Hierdurch wird eine Gravurwalze erzeugt, bei der die äußere Härtegefüge-Randschicht eine hohe Verschleißfestigkeit bewirkt, die darunter befindliche, verbleibende Vergütungsgefüge-Schicht eine Zähigkeit bewahrt, die zusammen mit der Härtegefüge-Randschicht eine gute Resistenz des Walzenkörpers gegen plastische Verformungen aufgrund durch den Walzenspalt durchlaufender Dickstellen sicherstellt.

Auch ist es möglich, eine Oberflächenschicht der Walze, die eine Dicke von typischerweise 0,5 bis 1 mm aufweist, zu nitrieren.

Zwar hat sich überraschenderweise gezeigt, dass die Walze bereits vor dem Gravieren nach dem Randschichtaufheizen des Walzenrohlings, dem Abschrecken der aufgeheizten Randschicht und dem Anlassen der Randschicht auf Vergütungsgefüge eine äußere Form annimmt, die regelmäßig zumindest im Wesentlichen der Form der Walze nach dem Gravieren und gegebenenfalls Randschichthärten aufweist. Noch bessere Aussagen über die Form des Walzenkörpers nach einer abschließenden Randschichthärtung nach dem Gravieren lassen sich jedoch treffen, wenn vor dem erfindungsgemäßen Anlassen der Randschicht auf Vergütungsgefüge die Randschicht zwischenzeitlich auf Härtegefüge angelassen wird. Die Walze wird dann mit noch größerer Wahrscheinlichkeit beim Randschichthärten nach dem Gravieren ganz im Wesentlichen dieselbe Form annehmen wie nach Durchführung des Anlassens auf Härtegefüge, so dass die Vermessung des Rohlings nach diesem zusätzlichen Verfahrensschritt noch genauere Aussagen über die Eignung für ein Randschichthärten nach dem Gravieren oder die Notwendigkeit einer weiteren Bearbeitung des Walzenrohlings zulässt.

Das Randschichtaufheizen kann grundsätzlich auf jede beliebige Weise, beispielsweise durch Wärmeeinwirkung von außen mit Hilfe von Brennern, Lasern etc. erfolgen. Besonders bevorzugt ist es jedoch, das Randschichtaufheizen induktiv zu bewirken, d.h. indem Energie in Form eines elektromagnetischen Wechselfeldes in die Randschicht übertragen und dort durch induzierte Wirbelströme in Wärme umgewandelt wird.

Das Abschrecken der aufgeheizten Randschicht erfolgt durch Abkühlung an Luft oder beispielsweise durch Aufbringen eines Kühlmittels, insbesondere durch Aufspritzen von Wasser, Öl, Wasser-Öl-Emulsionen oder Polymer-Lösungen.

Das Anlassen der Randschicht auf Vergütungs- oder Härtegefüge kann insbesondere durch Einbringen für eine vorbestimmte Zeit des Walzenkörpers in einen auf Vergütungs- oder Härteanlasstemperatur geheizten oder heizbaren Ofen erfolgen.

Die Erfindung betrifft auch eine Gravurwalze, die einen Walzenkörper mit einem Radius umfasst, wobei der Walzenkörper eine vergütete oder gehärtete Randschicht einer Dicke zwischen 0,5 Prozent und 50 Prozent des Radius, besonders bevorzugt zwischen 1 Prozent und 10 Prozent des Radius aufweist.

Als ausreichend gut vergüt- und härtbares und gut beschaffbares und kostengünstig härtbares Material hat sich der Werkstoff 42CrMo4 erwiesen.

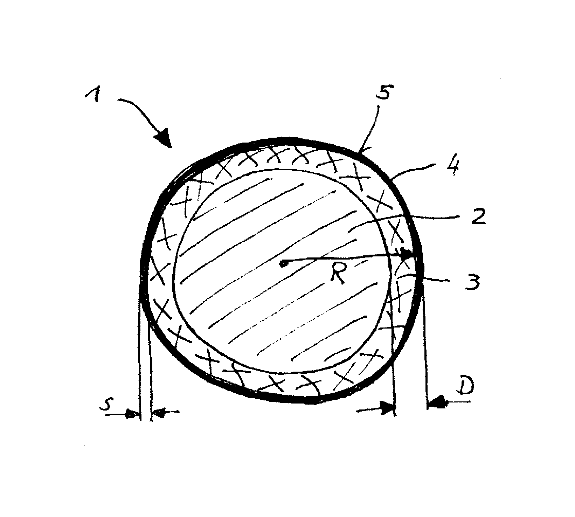

In der Zeichnung ist - schematisch - ein Ausführungsbeispiel einer erfindungsgemäßen Gravurwalze 1 dargestellt. Sie umfasst einen massiven Walzenkörper 2. Er weist eine Randschicht 3 aus Vergütungsgefüge auf, die durch Randschichtaufheizen des zuvor erkalteten Walzenkörpers, anschließendes Abschrecken und schließliches Anlassen auf Vergütungstemperatur erzeugt worden ist. Die Randschicht weist bei diesem Walzenkörper eine Dicke D von etwa 20 mm auf. Der Radius R dieser Walze beträgt 250 mm.

Die Gravurwalze 1 umfasst darüber hinaus eine äußere Verschleißschutzschicht 4, die bei der dargestellten Walze eine Dicke S von 1 mm aufweist. Ferner umfasst die Gravurwalze 1 eine in ihren Außenumfang eingearbeitete Gravur 5, deren Struktur in der Zeichnung nicht im Einzelnen erkennbar ist.

### Bezugszeichenliste:

- 1: Gravurwalze
- 2: Walzenkörper
- 3: Randschicht
- 4: Verschleißschutzschicht
- 5: Gravur

- D: Dicke
- R: Radius
- S: Dicke

## Patentansprüche

1. Gravurwalzen-Herstellungsverfahren, mit den folgenden Schritten:
- Bereitstellen eines abgekühlten Walzenrohlings
- Kontinuierliches, zonenweises Randschichtaufheizen des Walzenrohlings
- Abschrecken der aufgeheizten Randschichtzone
- Anlassen auf Vergütungsgefüge
- Gravieren des Walzenkörpers.

2. Gravurwalzen-Herstellungsverfahren nach Anspruch 1, **dadurch gekennzeichnet, dass** nach dem Gravieren eine Randschichthärtung durchgeführt wird.

3. Gravurwalzen-Herstellungsverfahren nach Anspruch 1, **dadurch gekennzeichnet, dass** vor dem Gravieren eine Randschichthärtung durchgeführt wird.

4. Gravurwalzen-Herstellungsverfahren nach Anspruch 2 oder 3, **dadurch gekennzeichnet, dass** die Randschichthärtung ein Randschichtaufheizen, ein nachfolgendes Abschrecken der Randschicht und ein danach folgendes Anlassen auf Härtegefüge umfasst.

5. Gravurwalzen-Herstellungsverfahren nach Anspruch 1, **dadurch gekennzeichnet, dass** nach dem Gravieren eine Oberflächenschicht nitriert wird.

6. Gravurwalzen-Herstellungsverfahren nach einem der Ansprüche 1 bis 5, **dadurch gekennzeichnet, dass** vor dem Anlassen der Randschicht auf Vergütungsgefüge die Randschicht auf Härtegefüge angelassen wird.

7. Gravurwalzen-Herstellungsverfahren nach einem der Ansprüche 1 bis 6, **dadurch gekennzeichnet, dass** das Randschichtaufheizen induktiv erfolgt.

8. Gravurwalzen-Herstellungsverfahren nach einem der Ansprüche 1 bis 7, **dadurch gekennzeichnet, dass** das Abschrecken durch Aufspritzen von Wasser, Öl, Wasser-Öl-Emulsionen oder Polymer-Lösungen erfolgt.

9. Gravurwalzen-Herstellungsverfahren nach einem der Ansprüche 1 bis 8, **dadurch gekennzeichnet, dass** das Anlassen der Randschicht durch Einbringen des Walzenkörpers in einen auf Vergütungs- oder Härtungsanlasstemperatur geheizten oder heizbaren Ofen für eine vorbestimmte Zeit erfolgt.

10. Gravurwalze (1),
mit einem Walzenkörper (2) mit einem Radius (R),
**dadurch gekennzeichnet,**
**dass** der Walzenkörper (2) eine vergütete Randschicht (3) mit einer Dicke (D) von 1 bis 50 mm aufweist.

11. Gravurwalze nach Anspruch 10, **dadurch gekennzeichnet, dass** die Dicke (D) der Randschicht (3) 3 bis 15 mm beträgt.

12. Gravurwalze nach Anspruch 10 oder 11, **dadurch gekennzeichnet, dass** der Walzenkörper (2) zumindest im Wesentlichen aus dem Werkstoff 42CrMo4 besteht.

13. Gravurwalze nach einem der Ansprüche 1 bis 12, **dadurch gekennzeichnet, dass** der Walzenkörper (2) eine Verschleißschutzschicht (4) umfasst.

14. Gravurwalze nach Anspruch 13, **dadurch gekennzeichnet, dass** die Verschleißschutzschicht (4) eine nitrierte Schicht umfasst.

15. Gravurwalze nach Anspruch 14, **dadurch gekennzeichnet, dass** die Dicke (S) der Verschleißschutzschicht (4) 0,5 bis 1,0 mm beträgt.
